# EUROPÄISCHE PATENTSCHRIFT

(11) **EP 3 338 072 B1**
(45) Veröffentlichungstag und Bekanntmachung des Hinweises auf die Patenterteilung: **28.09.2022**
(21) Anmeldenummer: 16763212.4
(22) Anmeldetag: 22.08.2016
(51) Int. Cl.: G01M 3/18, G01M 3/32, B29C 70/44

(54) **ANORDNUNG FÜR DAS VAKUUMSACKVERFAHREN UND ZUGEHÖRIGES VERFAHREN**
ARRANGEMENT FOR THE VACUUM BAGGING METHOD, AND ASSOCIATED METHOD
ENSEMBLE DESTINÉ AU MOULAGE PAR INFUSION SOUS VIDE ET PROCÉDÉ Y RELATIF

(30) Priorität: 22.08.2015 DE 102015010815
(43) Veröffentlichungstag der Anmeldung: 27.06.2018
(73) Patentinhaber: iNDTact GmbH, 97076 Würzburg (DE)
(72) Erfinder: PETRICEVIC, Raino, 97074 Würzburg (DE); RADESTOCK, Oliver, 97078 Würzburg (DE); LAUNER, Clemens, 97204 Höchberg (DE); KUHN, Dominik, DE / 63263 Neu-Isenburg (DE)
(74) Vertreter: Dr. Gassner & Partner mbB
(86) Internationale Anmeldenummer: PCT/EP2016/069799
(87) Internationale Veröffentlichungsnummer: WO 2017/032741

(56) Entgegenhaltungen:
- EP-A1- 0 962 756
- EP-A2- 2 105 285
- DE-U1-202013 002 157
- US-A- 4 454 440
- US-A1- 2010 170 326

## Beschreibung

Die Erfindung betrifft eine Anordnung für das Vakuumsackverfahren mit einer Messvorrichtung mit wenigstens einem Messaufnehmer zur Ermittlung einer Leckage beim Vakuumsackverfahren. Daneben betrifft die Erfindung ein Verfahren zum Ermitteln einer Leckage beim Vakuumsackverfahren.

Bei der Herstellung von Faserverbundteilen ist das Vakuumsackverfahren ein gängiges Verfahren um komplexe Formen durch einen Schichtaufbau von sogenannten Prepregs während des Aushärtens mit den notwenigen Presskräften zu beaufschlagen. Prepregs bestehen aus textilen Halbzeugen, die mit einem Reaktionsharz vorimprägniert sind (englisch: preimpregnated). Diese Prepregs werden zur Herstellung eines Faserverbundbauteils unter Temperaturzufuhr und Druck ausgehärtet. Einzelne Zuschnitte von Prepregs werden dazu schichtweise übereinander auf oder in eine gewünschte Form gelegt. Auf diese Weise entsteht ein mehrlagiger Aufbau, der mit einer gasdichten Folie überzogen wird. Die gasdichte Folie wird an den Rändern ringsherum abgedichtet, wodurch der sogenannte Vakuumsack entsteht. Die Prepregs werden auf einer Unterlage angeordnet, die als Negativform oder Positivform ausgebildet sein kann. Diese Anordnung wird anschließend über einen oder mehrere Anschlüsse evakuiert. Mittels einer Vakuumpumpe wird Luft aus dem Vakuumsack gepumpt, wodurch sich der Vakuumsack ganz eng um die Unterlage bzw. die mit Prepregs belegte Form legt. In diesem Zustand wird die Anordnung in einem Autoklaven unter erhöhter Temperatur und Druckbeaufschlagung ausgehärtet. Dabei wird der evakuierte Zustand des Vakuumsacks beibehalten, um eine Presswirkung des von außen auf die Prepregs wirkenden Gasdrucks zu erzielen. Allerdings kann es bei jedem dieser Schritte durch mechanische und/oder thermische Belastungen zu kleinen oder größeren Undichtigkeiten im Bereich des Vakuumsacks kommen. Denkbar ist z. B. ein Einriss der gasdichten Folie, die den Vakuumsack bildet oder eine Undichtigkeit im Bereich der Randabdichtung zwischen der gasdichten Folie und der Unterlage oder der Form. Wenn derartige Undichtigkeiten zu spät oder gar nicht erkannt bzw. behoben werden, kann das Bauteil nicht homogen aushärten und ist dann in der Regel unbrauchbar, wodurch ein großer wirtschaftlicher Schaden entstehen kann.

Üblicherweise wird eine Undichtigkeit durch eine erhöhte Leckrate während des Evakuierens festgestellt. Der Evakuiervorgang wird durch ein Manometer überwacht. Allerdings sind die Grenzwerte für noch tolerierbare Leckraten sehr niedrig. Durch die begrenzte Auflösung eines Manometers kann es daher z. B. bis zu einer Stunde dauern, bis eine zuverlässige Leckrate ermittelt werden kann. Zudem ist die Ortung einer festgestellten Undichtigkeit mittels eines Manometers nicht möglich. Stattdessen werden kritische Stellen mittels eines speziellen Mikrofons abgehört. Dieses Vorgehen ist allerdings sehr aufwändig, weshalb das Vakuumsackverfahren für viele Anwendungen der Serienproduktion ineffizient und unwirtschaftlich ist.

Der Erfindung liegt daher die Aufgabe zu Grunde, eine Anordnung für das Vakuumsackverfahren mit einer Messvorrichtung mit einem Messaufnehmer zur Ermittlung einer Leckage beim Vakuumsackverfahren anzugeben, die eine schnelle und zuverlässige Ermittlung einer Leckrate ermöglicht. Ein weiteres Ziel ist die Ermittlung der Position einer Leckage.

Zur Lösung dieser Aufgabe ist bei einer Anordnung für das Vakuumsackverfahren mit einer Messvorrichtung der eingangs genannten

Art gemäß Anspruch 1 vorgesehen, dass der Messaufnehmer wenigstens einen elastischen piezoelektrischen Sensor aufweist, der unter Bildung von mindestens zwei Lagerstellen auf einem Stützelement aufliegt, wobei die Messvorrichtung eine Auswerteeinrichtung umfasst, die dazu ausgebildet ist, durch Auswerten von von dem piezoelektrischen Sensor gelieferten Messsignalen eine Leckrate und/oder eine Position einer Leckage zu ermitteln. Die Erfindung beruht auf der Erkenntnis, dass eine zuverlässige Ermittlung einer Leckage durch eine Messvorrichtung vorgenommen werden kann, die einen Messaufnehmer mit einem elastischen piezoelektrischen Sensor aufweist. Der Messaufnehmer kann innerhalb des Vakuumsacks angeordnet werden, so dass er während des Evakuierens durch eine Druckkraft beaufschlagt wird. Da der elastische piezoelektrische Sensor über wenigstens zwei Lagerstellen auf einem Stützelement aufliegt, ruft die beim Evakuieren herrschende Druckkraft eine Biegebelastung des Sensors hervor. Die Messvorrichtung, insbesondere der elastische piezoelektrische Sensor, ist an die Auswerteeinrichtung angeschlossen, so dass von dem piezoelektrischen Sensor gelieferte Messsignale ausgewertet werden können, um eine Leckrate und/oder eine Position einer Leckage zu ermitteln.

Derartige Messvorrichtungen sind an sich bekannt, beispielsweise wird auf die von demselben Anmelder stammende Druckschrift WO 2014/086793 A2 sowie auf die EP 2 372 802 B1 verwiesen.

Ferner ist aus der Druckschrift EP 0 962 756 A1 ein zerstörungsfreies Leckage-Testverfahren für vakuumverpackte Lebensmittel bekannt. Anhand diesem Testeverfahren wird die Verpackung an einer Seite angehoben, dann auf einen Piezosensor fallen gelassen und daraus ein Sensorsignal erfasst, mit dem bestimmt werden kann ob eine Leckage vorliegt oder nicht.

Darüber hinaus ist aus der Druckschrift US 4 454 440 A ein Drucksensor für Oberflächenwellen bekannt, welcher innerhalb eines unter Vakuum befindlichen Gehäuses angeordnet ist und durch die Einkapselung unabhängig von Temperaturschwankungen ist.

Der elastische piezoelektrische Sensor der Messvorrichtung zeichnet sich durch eine hohe Genauigkeit, ein hervorragendes Signal-Rausch-Verhältnis, ein schnelles Ansprechverhalten und eine hohe Empfindlichkeit aus. Somit ist es möglich, den innerhalb des Vakuumsacks herrschenden Druck hochpräzise zu messen und zu überwachen. Durch die Auswertung der von dem piezoelektrischen Sensor gelieferten Messsignale kann die Leckrate und/oder die Position einer Leckage ermittelt werden.

Erfindungsgemäß wird es bevorzugt, dass eine Lagerstelle punktförmig, bogenförmig, linienförmig oder flächig ausgebildet ist. Wesentlich ist dabei, dass der elastische piezoelektrische Sensor nicht unmittelbar auf einer Unterlage, beispielsweise auf einer Form, aufliegt, sondern durch das Stützelement von der Unterlage beabstandet ist. Der eine gewisse Ausdehnung aufweisende elastische piezoelektrische Sensor ist auf dem Stützelement abgestützt, so dass die beim Evakuieren herrschende Druckkraft eine geringe, jedoch präzise messbare Biegung hervorruft.

Bei der erfindungsgemäßen Messvorrichtung wird es bevorzugt, dass die Biegefestigkeit des elastischen piezoelektrischen Sensors 1 MPa oder mehr beträgt. Da der Sensor aus einem Faserverbundmaterial hergestellt ist, kann durch die Wahl des oder der dafür verwendeten Werkstoffe die Biegefestigkeit an eine bestimmte Anwendung angepasst werden.

Der Elastizitätsmodul des Sensors der erfindungsgemäßen Messvorrichtung beträgt 0,1 GPa bis 100 GPa. Durch die Wahl und Anordnung unterschiedlicher Faserverbundwerkstoffe kann ein bestimmter Elastizitätsmodul, der für eine bestimmte Anwendung erforderlich ist, erhalten werden.

Der elastische piezoelektrische Sensor zeichnet sich vorzugsweise dadurch aus, dass er in einem Temperaturbereich zwischen 20 °C und 180 °C einsetzbar ist. Dementsprechend kann der Sensor auch beim Aushärten der Prepregs in einem Autoklaven bei erhöhter Temperatur eingesetzt werden. Ggf. kann eine Temperaturkompensation der Messsignale erfolgen.

Das Stützelement, auf dem der elastische piezoelektrische Sensor aufliegt, kann als Ring oder als rechteckiger oder quadratischer Rahmen oder als Keil ausgebildet sein. Das Stützelement kann zwei oder mehr separate Lagerstellen umfassen. Grundsätzlich wäre sogar ein Stützelement mit lediglich einer Lagerstelle denkbar, so dass der Sensor an einer Seite vom Untergrund beabstandet ist.

Eine besonders einfache Handhabung ergibt sich bei der erfindungsgemäßen Messvorrichtung wenn der piezoelektrische Sensor und das Stützelement als einstückiges, integrales Bauteil ausgebildet sind. Die beiden Komponenten können beispielsweise miteinander verklebt sein oder das Stützelement kann direkt bei der Herstellung des piezoelektrischen Sensors angeformt werden.

Gemäß Anspruch 1 betrifft die Erfindung eine Anordnung für das Vakuumsackverfahren, umfassend eine einen Vakuumsack bildende gasdichte Folie, die abgedichtet auf einer Unterlage angeordnet ist und eine in dem Vakuumsack abgeordnete Messvorrichtung der beschriebenen Art mit wenigstens einem Messaufnehmer und einem auf der Unterlage aufliegenden Stützelement.

Eine bevorzugte Variante der erfindungsgemäßen Anordnung sieht vor, dass die Messvorrichtung mehrere verteilt in dem Vakuumsack angeordnete Messaufnehmer aufweist. Jedem Messaufnehmer kann eine eigene Auswerteeinrichtung zugeordnet sein. Alternativ kann auch eine einzige zentrale Auswerteeinrichtung für mehrere Messaufnehmer vorgesehen sein.

Eine bevorzugte Ausgestaltung der erfindungsgemäßen Anordnung sieht vor, dass die Unterlage eine Ausnehmung für Messaufnehmer aufweist, so dass ein Messaufnehmer oberflächenbündig in die Unterlage integriert ist. Ein Messaufnehmer kann dann von der Unterseite der Unterlage montiert werden.

Daneben betrifft die Erfindung gemäß Anspruch 10 ein Verfahren zum Ermitteln einer Leckage beim Vakuumsackverfahren. Das erfindungsgemäße Verfahren umfasst die folgenden Schritte:
- Bereitstellen einer Anordnung mit einem Vakuumsack und einer darin angeordneten Messvorrichtung der beschriebenen Art in einem Vakuumsack,
- Evakuieren des Vakuumsacks über einen Vakuumanschluss,
- Erfassen von Messsignalen, die von dem piezoelektrischen Sensor geliefert werden, und
- Auswerten der Messsignale durch eine Auswerteeinrichtung zum Ermitteln einer Leckrate und/oder einer Position einer Leckage des Vakuumsacks.

Die von dem wenigstens einen elastischen piezoelektrischen Sensor gelieferten, hochgenauen Messsignale werden in der Auswerteeinrichtung analysiert. Dadurch können Rückschlüsse auf in dem Vakuumsack herrschende Zustandsgrößen, insbesondere auf den Druck bzw. Unterdruck, gezogen werden. Durch die Auswertung der Messsignale kann die Leckrate festgestellt werden. Alternativ oder zusätzlich kann die Position einer Leckage festgestellt werden. Bei dem erfindungsgemäßen Verfahren wird es bevorzugt, dass beim Auswerten der Messsignale deren zeitliche Ableitung bestimmt wird, die eine den Abstand zwischen dem Sensor und der Leckage charakterisierende Information liefert. Anhand der ersten Ableitung des Messsignals, d. h. anhand der Steigung, kann der Abstand zwischen dem Sensor und der Leckage bestimmt werden.

Die Sensoren und die Messvorrichtung sind besonders sensitiv für kleinste Druckschwankungen in einer mechanisch stark gedämpften Umgebung, wie sie in einem Vakuumsack vorherrscht. Es hat sich gezeigt, dass diese Sensitivität ausreicht, um auch kleinste, nicht tolerierbare Undichtigkeiten beim Vakuumsackverfahren innerhalb kürzester Zeit zu detektieren.

Neben dem Sensor und dem Stützelement kann ein elektrischer Analogverstärker und/oder ein Analogsignalfilter bei der Durchführung des erfindungsgemäßen Verfahrens verwendet werden. Die Auswerteeinrichtung kann zur Erfassung, Digitalisierung, Auswertung und zur Anzeige der von dem oder den Sensor/en gelieferten Messsignale in Echtzeit ausgebildet sein.

Bei dem erfindungsgemäßen Verfahren können kleinste Druckschwankungen innerhalb des Vakuumsacks überwacht und detektiert werden. Wenn die Vakuumpumpe abgeschaltet oder abgekoppelt wird, zeigt die Messvorrichtung sofort ein zur Leckrate proportionales Signal an. Es handelt sich dabei um einen wesentlichen stationären Zustand.

Bei dem erfindungsgemäßen Verfahren können die Leckrate und/oder die Position der Undichtigkeit anhand des Anstiegsverhaltens der transienten Messsignale der Messvorrichtung ermittelt werden.

Es hat sich herausgestellt, dass die Anstiegsflanke des Messsignals eines Sensors der Messvorrichtung umso steiler ist, je näher sich die entstandene Leckage an der Messvorrichtung befindet. Beim Auftreten einer Leckage kommt es zu einer plötzlichen Druckerhöhung, die von dem Sensor unmittelbar erfasst werden kann. Überraschenderweise wurde auch herausgefunden, dass die Zeit bis zum Erreichen der maximalen Steigung charakteristisch für den Abstand zwischen dem Sensor und der Leckage ist. Da sich der Verlauf der Steigung, d. h. der Verlauf der ersten Ableitung des zeitlichen Verlaufs des Messsignals und dessen Maximum und/oder Minimum charakteristisch in Abhängigkeit des Abstands zwischen der Leckage und dem Sensor ändert, kann z. B. mittels Triangulation auf die Position einer Undichtigkeit, d. h. einer Leckage, relativ zur Position des Sensors, geschlossen werden. Alternative Verfahren sind "machine learning", Mustererkennung oder neuronale Netze. Da der Sensor oder die Sensoren an festgelegten Positionen angeordnet sind, kann durch die automatische Auswertung der Messsignale mehrerer Sensoren die absolute Position einer Leckage automatisch ermittelt und angezeigt werden.

Eine weitere Variante des erfindungsgemäßen Verfahrens sieht vor, dass beim Auswerten der Messsignale ein Offset, d. h. ein konstanter Druckanstieg, zwischen den Messsignalen nach der Abkopplung der Vakuumpumpe verschiedener Messaufnehmer bestimmt wird, der eine die Leckrate betreffende Information liefert. Anhand des Offsets kann auf die Leckrate und/oder die Position einer Leckage geschlossen werden.

Eine Weiterbildung des erfindungsgemäßen Verfahrens sieht vor, dass die Position einer Leckage bestimmt wird, indem der Vakuumsack mit einem eine festgelegte Größe aufweisenden Folienabschnitt überstrichen wird und ein beim Überstreichen der Leckage auftretendes charakteristisches transientes Messsignal erfasst und ausgewertet wird. Der dafür verwendete Folienabschnitt kann beispielsweise mit einem nachgiebigen Material verbunden sein, beispielsweise mit einem Schwamm. Durch Überstreichen des Vakuumsacks mit dem an dem Schwamm angebrachten Folienabschnitt wird eine ggf. vorhandene Leckage temporär abgedichtet und verschlossen. Dadurch ergibt sich ein Druckimpuls, der durch die Auswertung des transienten Signals erfasst, ausgewertet und angezeigt werden kann. Dementsprechend kann ein Leck des Vakuumsacks auf diese Weise leicht lokalisiert werden.

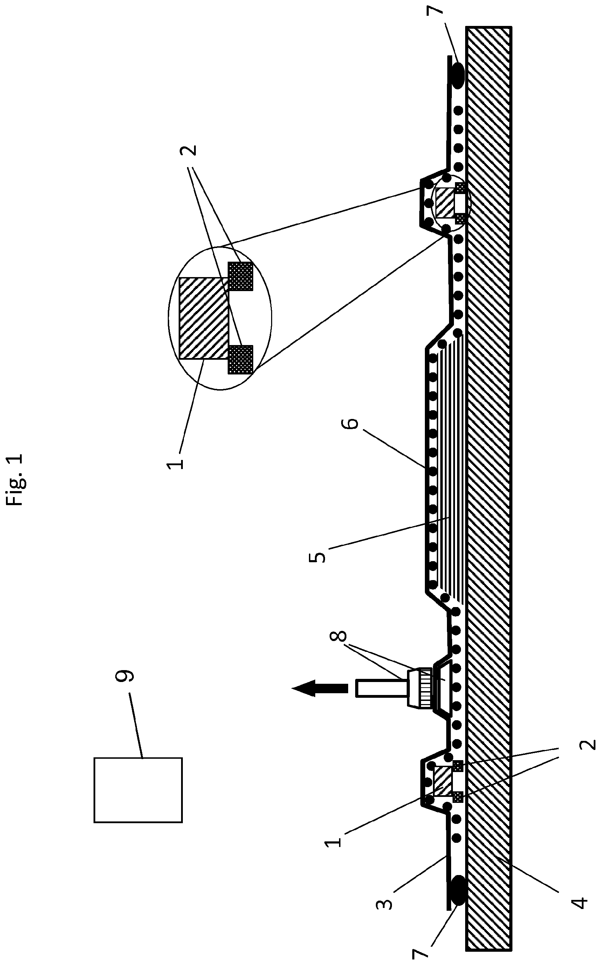

Nachfolgend wird ein Ausführungsbeispiel der Erfindung unter Bezugnahme auf die einzige Figur näher erläutert.

Die einzige Figur ist eine geschnittene Ansicht und zeigt eine erfindungsgemäße Anordnung mit erfindungsgemäßen Messvorrichtungen, die für die Durchführung des erfindungsgemäßen Verfahrens geeignet sind.

Im oberen Teil der Figur ist ein als Biegesensor ausgebildeter elastischer piezoelektrischer Sensor 1 im Querschnitt schematisch dargestellt. Der dort gezeigte Querschnitt ist lediglich beispielhaft. Der Sensor 1 kann auch einen flacheren Aufbau aufweisen. Der Sensor 1 liegt auf zwei Stützelementen 2 auf, die im Bereich der Kanten des Sensors 1 angeordnet sind. Bei der Durchführung des Vakuumsackverfahrens wird der Sensor 1 während des Evakuierens von einer Druckkraft beaufschlagt, so dass er eine Biegebelastung erfährt.

Die in der Figur gezeigte Anordnung weist zwei derartige Sensoren 1 mit je einem Stützelement 2 auf, das in diesem Ausführungsbeispiel als Ring ausgebildet ist. Eine gasdichte Folie bildet einen Vakuumsack 3, der oberhalb einer Unterlage aufgelegt ist, die einen Vakuumtisch 4 bildet. Auf dem Vakuumtisch 4 befindet sich ein Prepreglaminat 5, d. h. eine gestapelte Anordnung von Zuschnitten eines Prepregs. Zwischen dem Prepreglaminat 5 und dem Vakuumsack 3 befindet sich eine luftführende Schicht 6 in einem Vlies. Der Vakuumsack 3 ist ringsherum durch Dichtungen 7 gegenüber dem Vakuumtisch 4 abgedichtet. In den Vakuumsack 3 ist ein Vakuumanschluss 8 integriert, der mit einer Vakuumpumpe (nicht gezeigt) verbunden ist. Es sind auch abgewandelte Ausführungen möglich, bei denen mehrere Vakuumanschlüsse an der Unterseite des Vakuumtischs angeordnet sind. Es können mehrere entlang des Umfangs des Vakuumtischs angeordnete Vakuumanschlüsse vorgesehen sein.

Die Anordnung umfasst ferner eine Auswerteeinrichtung 9, die mit allen Sensoren 1 über abgeschirmte Messleitungen verbunden ist.

Nach dem Einbringen der Messvorrichtung, die aus den Sensoren 1 und den zugehörigen Stützelementen 2 besteht, in den Vakuumsack 3 wird der Vakuumsack 3 durch Einschalten der Vakuumpumpe über den Vakuumanschluss 8 evakuiert. Die Sensoren 1 liefern Messsignale, die in der Auswerteeinrichtung 9 verarbeitet werden. Durch die Auswertung der Messsignale kann eine Leckrate bestimmt und überwacht werden. Beim Auftreten einer Leckage, d. h. einer unerwünschten Undichtigkeit des Vakuumsacks 3, kann durch Auswerten der Messsignale der mehreren Sensoren 1 sowohl der Abstand einzelner Sensoren 1 von dem Ort der Leckage als auch die Leckrate, ermittelt werden. Die Auswerteeinrichtung 9, die optional mit einer Anzeige, beispielsweise einem Bildschirm, verbunden ist, zeigt Position und Größe der Leckage an, so dass die Leckage schnell beseitigt werden kann.

### Bezugszeichenliste

- 1: Sensor
- 2: Stützelement
- 3: Vakuumsack
- 4: Vakuumtisch
- 5: Prepreglaminat
- 6: luftführende Schicht
- 7: Dichtung
- 8: Vakuumanschluss
- 9: Auswerteeinrichtung

## Patentansprüche

1. Anordnung für das Vakuumsackverfahren, umfassend eine einen Vakuumsack (3) bildende gasdichte Folie, die abgedichtet auf einer Unterlage angeordnet ist, mit einer in dem Vakuumsack (3) angeordneten Messvorrichtung mit wenigstens einem Messaufnehmer zur Ermittlung einer Leckage bei dem an sich bekannten Vakuumsackverfahren zur Herstellung eines Faserverbundbauteils, bei dem ein mehrlagiger Aufbau von Prepregs mit der den Vakuumsack (3) bildenden gasdichten Folie überzogen wird, **dadurch gekennzeichnet, dass** der Messaufnehmer wenigstens einen innerhalb des Vakuumsacks (3) angeordneten elastischen piezoelektrischen Sensor (1) aufweist, der über mindestens zwei Lagerstellen auf einem Stützelement (2) aufliegt, wobei der piezoelektrische Sensor (1) durch eine beim Evakuieren des Vakuumsacks (3) wirkende, eine Biegebelastung des piezoelektrischen Sensors (1) hervorrufende Druckkraft beaufschlagbar ist, wobei die Messvorrichtung eine Auswerteeinrichtung (9) umfasst, die dazu ausgebildet ist, durch Auswerten von Messsignalen des piezoelektrischen Sensors (1) eine Leckrate und/oder eine Position einer Leckage zu ermitteln.

2. Anordnung nach Anspruch 1, **dadurch gekennzeichnet, dass** eine Lagerstelle punktförmig, bogenförmig, linienförmig oder flächig ausgebildet ist.

3. Anordnung nach Anspruch 1 oder 2, **dadurch gekennzeichnet, dass** die Biegefestigkeit des Sensors (1) 1 MPa oder mehr beträgt.

4. Anordnung nach einem der vorangehenden Ansprüche, **dadurch gekennzeichnet, dass** der Elastizitätsmodul des Sensors (1) 0,1 GPa bis 100 GPa beträgt.

5. Anordnung nach einem der vorangehenden Ansprüche, **dadurch gekennzeichnet, dass** der Sensor (1) in einem Temperaturbereich zwischen 20 °C und 180 °C einsetzbar ist.

6. Anordnung nach einem der vorangehenden Ansprüche, **dadurch gekennzeichnet, dass** das Stützelement (2) als Ring oder als rechteckiger oder quadratischer Rahmen oder als Keil ausgebildet ist.

7. Anordnung nach einem der vorangehenden Ansprüche, **dadurch gekennzeichnet, dass** der piezoelektrische Sensor (1) und das Stützelement (2) als einstückiges, integrales Bauteil ausgebildet sind.

8. Anordnung nach Anspruch 1, **dadurch gekennzeichnet, dass** die Messvorrichtung mehrere verteilt in dem Vakuumsack (3) angeordnete Messaufnehmer aufweist.

9. Anordnung nach Anspruch 1 oder 8, **dadurch gekennzeichnet, dass** die Unterlage eine Ausnehmung aufweist, in der ein Messaufnehmer oberflächenbündig zur Unterlage angeordnet ist.

10. Verfahren zum Ermitteln einer Leckage beim Vakuumsackverfahren zur Herstellung eines Faserverbundteils, bei dem ein mehrlagiger Aufbau von Prepregs mit einer einen Vakuumsack (3) bildenden gasdichten Folie überzogen wird, mit den folgenden Schritten:
- Bereitstellen einer Anordnung mit einem Vakuumsack (3) und einer darin angeordneten Messvorrichtung nach einem der Ansprüche 1 bis 9,
- Evakuieren des Vakuumsacks (3) über einen Vakuumanschluss (8),
- Erfassen von Messsignalen, die von dem piezoelektrischen Sensor (1) geliefert werden, und
- Auswerten der Messsignale durch eine Auswerteeinrichtung (9) zum Ermitteln einer Leckrate und/oder einer Position einer Leckage des Vakuumsacks (3).

11. Verfahren nach Anspruch 10, **dadurch gekennzeichnet, dass** beim Auswerten der Messsignale deren zeitliche Ableitung bestimmt wird, die eine den Abstand zwischen dem Sensor (1) und der Leckage charakterisierende Information enthält.

12. Verfahren nach Anspruch 10 oder 11, **dadurch gekennzeichnet, dass** beim Auswerten der Messsignale ein zeitlicher Offset zwischen den Messsignalen verschiedener Messaufnehmer bestimmt wird, der eine die Leckrate betreffende Information enthält.

13. Verfahren nach einem der Ansprüche 10 bis 12, **dadurch gekennzeichnet, dass** beim Auswerten der Messsignale die Position einer Leckage durch Triangulation und/oder durch "machine learning" und/oder durch Mustererkennung und/oder neuronale Netze bestimmt wird.

14. Verfahren nach einem der Ansprüche 10 bis 13, **dadurch gekennzeichnet, dass** die Position einer Leckage bestimmt wird, indem der Vakuumsack (3) mit einem eine festgelegte Größe aufweisenden Folienabschnitt überstrichen wird und ein beim Überstreichen der Leckage auftretendes charakteristisches transientes Messsignal erfasst und ausgewertet wird.

## Claims

1. Arrangement for the vacuum bag process, comprising a gas-tight film which forms a vacuum bag (3) and is arranged in a sealed manner on a base, having a measuring device which is arranged in the vacuum bag (3) and has at least one measuring sensor for determining a leakage in the vacuum bag process, known per se, for producing a fiber composite component, in which a multilayer structure of prepregs is covered with the gas-tight film which forms the vacuum bag (3), **characterized in that** the measuring sensor has at least one elastic piezoelectric sensor (1) which is arranged inside the vacuum bag (3) and rests on a supporting element (2) via at least two bearing points, the piezoelectric sensor (1) being subjected to a bending load of the piezoelectric sensor (1) acting during evacuation of the vacuum bag (3), causing a bending load on the piezoelectric sensor (1), the measuring device comprising an evaluation device (9) which is designed to determine a leakage rate and/or a position of a leakage by evaluating measurement signals from the piezoelectric sensor (1).

2. The arrangement according to claim 1, **characterized in that** a bearing point is point-shaped, arc-shaped, linear or flat.

3. The arrangement according to claim 1 or 2, **characterized in that** the bending strength of the sensor (1) is 1 MPa or more.

4. The arrangement according to one of the preceding claims, **characterized in that** the modulus of elasticity of the sensor (1) is 0.1 GPa to 100 GPa.

5. The arrangement according to one of the preceding claims, **characterized in that** the sensor (1) can be used in a temperature range between 20 °C and 180 °C.

6. The arrangement according to one of the preceding claims, **characterized in that** the support element (2) is designed as a ring or as a rectangular or square frame or as a wedge.

7. The arrangement according to one of the preceding claims, **characterized in that** the piezoelectric sensor (1) and the support element (2) are formed as a one-piece integral component.

8. The arrangement according to claim 1, **characterized in that** the measuring device has a plurality of measuring sensors arranged distributed in the vacuum bag (3).

9. The arrangement according to claim 1 or 8, **characterized in that** the base has a recess in which a measuring sensor is arranged flush with the surface of the base.

10. A method of detecting leakage in the vacuum bagging process for producing a fiber composite part, in which a multilayer structure of prepregs is covered with a gas-tight film forming a vacuum bag (3), comprising the following steps:
- Providing an assembly comprising a vacuum bag (3) and a measuring device arranged therein according to any one of claims 1 to 9,
- evacuating the vacuum bag (3) via a vacuum connection (8),
- acquisition of measurement signals supplied by the piezoelectric sensor (1), and
- evaluation of the measurement signals by an evaluation device (9) to determine a leakage rate and/or a position of a leakage of the vacuum bag (3).

11. The method according to claim 10, **characterized in that** during evaluation of the measurement signals their time derivative is determined, which contains information characterizing the distance between the sensor (1) and the leakage.

12. The method according to claim 10 or 11, **characterized in that**, during evaluation of the measurement signals, a time offset between the measurement signals of different sensors is determined which contains information relating to the leakage rate.

13. The method according to one of claims 10 to 12, **characterized in that** when evaluating the measurement signals, the position of a leakage is determined by triangulation and/or by "machine learning" and/or by pattern recognition and/or neural networks.

14. The method according to one of claims 10 to 13, **characterized in that** the position of a leakage is determined by coating the vacuum bag (3) with a film section having a fixed size and detecting and evaluating a characteristic transient measurement signal occurring when the leakage is coated.

## Revendications

1. Ensemble destiné au moulage par infusion sous vide, comprenant un film étanche au gaz formant un sac sous vide (3), lequel film est disposé de manière étanche sur un support, avec un dispositif de mesure disposé dans le sac sous vide (3) ayant au moins un capteur de mesure destiné à déterminer une fuite lors du moulage par infusion sous vide connu en soi pour la fabrication d'un élément composite renforcé par des fibres, dans lequel une structure multicouche de préimprégnés est recouverte du film étanche au gaz formant le sac sous vide (3), **caractérisé en ce que** le capteur de mesure comporte au moins un capteur piézoélectrique (1) élastique disposé à l'intérieur du sac sous vide (3), lequel capteur repose sur un élément d'appui (2) par l'intermédiaire d'au moins deux points d'appui, **en ce que** le capteur piézoélectrique (1) peut être actionné par une force de compression provoquant une charge de flexion du capteur piézoélectrique (1) agissant en faisant le vide du sac sous vide (3), **en ce que** le dispositif de mesure comporte un dispositif d'évaluation (9) qui est destiné à déterminer un débit de fuite et/ou un emplacement d'une fuite en évaluant des signaux de mesure du capteur piézoélectrique (1).

2. Ensemble selon la revendication 1, **caractérisé en ce qu'**un point d'appui est réalisé sous forme ponctuelle, en arc, linéaire ou plane.

3. Ensemble selon la revendication 1 ou 2, **caractérisé en ce que** la résistance à la flexion du capteur (1) est égale ou supérieure à 1 MPa.

4. Ensemble selon l'une des revendications précédentes, **caractérisé en ce que** le module d'élasticité du capteur (1) est compris entre 0,1 GPa et 100 GPa.

5. Ensemble selon l'une des revendications précédentes, **caractérisé en ce que** le capteur (1) peut être utilisé dans une plage de température comprise entre 20 °C et 180 °C.

6. Ensemble selon l'une des revendications précédentes, **caractérisé en ce que** l'élément d'appui (2) se présente sous forme d'anneau ou de cadre rectangulaire ou carré ou sous forme de coin.

7. Ensemble selon l'une des revendications précédentes, **caractérisé en ce que** le capteur piézoélectrique (1) et l'élément d'appui (2) sont réalisés en tant que composant intégral monobloc.

8. Ensemble selon la revendication 1, **caractérisé en ce que** le dispositif de mesure comporte plusieurs capteurs de mesure disposés de manière répartie dans le sac sous vide (3).

9. Ensemble selon la revendication 1 ou 8, **caractérisé en ce que** le support comporte un évidement dans lequel un capteur de mesure est disposé à fleur de surface par rapport au support.

10. Procédé destiné à la détermination d'une fuite lors du moulage par infusion sous vide pour la fabrication d'un élément composite renforcé par des fibres, dans lequel une structure multicouche de préimprégnés est recouverte d'un film étanche au gaz formant un sac sous vide (3), comprenant les étapes suivantes consistant à :
- mettre à disposition un ensemble comprenant un sac sous vide (3) et un dispositif de mesure disposé dans celui-ci selon l'une des revendications 1 à 9,
- faire le vide du sac sous vide (3) par l'intermédiaire d'un raccordement du vide (8),
- saisir des signaux de mesure qui sont délivrés par le capteur piézoélectrique (1), et
- évaluer les signaux de mesure par l'intermédiaire d'un dispositif d'évaluation (9) afin de déterminer un débit de fuite et/ou un emplacement d'une fuite du sac sous vide (3).

11. Procédé selon la revendication 10, **caractérisé en ce que** la dérivée temporelle des signaux de mesure est déterminée lors de leur évaluation, laquelle dérivée contient une information caractérisant la distance entre le capteur (1) et la fuite.

12. Procédé selon la revendication 10 ou 11 **caractérisé en ce que**, lors de l'évaluation des signaux de mesure, un décalage dans le temps entre les signaux de mesure de différents capteurs de mesure est déterminé, lequel contient une information concernant le débit de fuite.

13. Procédé selon l'une des revendications 10 à 12 **caractérisé en ce que**, lors de l'évaluation des signaux de mesure, l'emplacement d'une fuite est déterminée par triangulation et/ou par « apprentissage automatique » et/ou par reconnaissance de formes et/ou réseaux neuronaux.

14. Procédé selon l'une des revendications 10 à 13, **caractérisé en ce que** l'emplacement d'une fuite est déterminé par balayage du sac sous vide (3) avec un segment de film présentant une grandeur définie et en saisissant et évaluant un signal de mesure transitoire caractéristique survenant lors du balayage de la fuite.
